(19) Europäisches Patentamt / European Patent Office / Office européen des brevets

(11) **EP 4 194 202 A1**

(12) # EUROPEAN PATENT APPLICATION
published in accordance with Art. 153(4) EPC

(43) Date of publication:
**14.06.2023 Bulletin 2023/24**

(21) Application number: **21852674.7**

(22) Date of filing: **11.06.2021**

(51) International Patent Classification (IPC):
**B32B 27/18** (2006.01)     **B82Y 30/00** (2011.01)
**H01B 1/04** (2006.01)     **H01B 5/14** (2006.01)

(52) Cooperative Patent Classification (CPC):
**B32B 27/18; B82Y 30/00; H01B 1/04; H01B 5/14**

(86) International application number:
**PCT/JP2021/022386**

(87) International publication number:
**WO 2022/030106 (10.02.2022 Gazette 2022/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.08.2020 JP 2020135325
19.03.2021 JP 2021046437**

(71) Applicant: **SEKISUI CHEMICAL CO., LTD.**
**Osaka-shi**
**Osaka**
**530-8565 (JP)**

(72) Inventor: **KYOGOKU, Miho**
**Kyoto-shi, Kyoto 601-8105 (JP)**

(74) Representative: **Ter Meer Steinmeister & Partner
Patentanwälte mbB
Nymphenburger Straße 4
80335 München (DE)**

(54) **MULTILAYER BODY AND SECONDARY MOLDED ARTICLE**

(57)     A laminated body (1) includes a base material (10) and an antistatic coating layer (11). The antistatic coating layer (11) is provided on the base material (10) and contains carbon nanotubes and a resin. The specific surface area per unit weight of the carbon nanotubes is 350 m$^2$/g or more.

FIG. 1

**Description**

[Technical Field]

The present invention relates to a laminated body and a secondary formed product having an antistatic function.

[Background Art]

In a clean room or the like used for manufacturing semiconductors, generation of dust and the like is undesirable, so an antistatic sheet is used to release static electricity and prevent adhesion of dust.

The antistatic sheet has, for example, a transparent antistatic layer of a thermoplastic resin containing carbon fibers on the surface of a transparent base material made of a thermoplastic resin.

When such an antistatic sheet is thermoformed to produce a secondary product, the drawing of the antistatic layer reduces the frequency of mutual contact between the carbon fibers and widens the distance between the carbon fibers. As a result, there arises a problem that the antistatic performance is lost. For example, Patent Literature 1 proposes an antistatic resin formed product that solves this problem.

[Citation List]

[Patent Literature]

[Patent Literature 1] Japanese Patent Application Publication No. HI 1-353947

[Summary of Invention]

However, in Patent Document 1, since the electrical conductivity of the carbon fiber is low, it is necessary to increase the content of the carbon fiber or increase the thickness of the antistatic layer in order to ensure the antistatic property after drawing, as a result manufacturing restrictions are large.

An object of the present disclosure is to provide a laminated body and a secondary formed product thereof that is able to relax restrictions on manufacturing.

[Solution to Problem]

A laminated body according to a first disclosure includes a base material and an antistatic layer. The antistatic layer is provided on the base material and contains carbon nanotubes and resin. The specific surface area per unit weight of carbon nanotubes is 350 m$^2$/g or more.

The electrical conductivity of carbon nanotube (hereinafter also referred to as CNT) depends on the specific surface area, and the electrical conductivity increases as the specific surface area increases. In the present disclosure, by using carbon nanotubes having a specific surface area of 350 m$^2$/g or more, the electrical conductivity of the carbon nanotubes themselves can be improved compared to conventional ones.

Therefore, even when the carbon fiber content is less than before and the thickness of the antistatic layer is made smaller than before, the antistatic property can be ensured after drawing by thermoforming, and it is possible to relax the restrictions on manufacturing.

Moreover, since the content of carbon nanotubes can be suppressed, the transparency of the laminated body can be ensured. Furthermore, the transparency of the laminated body can be ensured by reducing the thickness of the antistatic layer.

The laminated body according to a second disclosure is the laminated body according to the first disclosure, wherein a thickness of the antistatic layer is 0.1 $\mu$m or more and 3 $\mu$m or less.

Thereby, the transparency of the laminated body can be ensured.

The laminated body according to a third disclosure is the laminated body according to the first disclosure, wherein an aspect ratio of the carbon nanotubes is 2000 or more.

By using carbon nanotubes with such large aspect ratios, the contact points between the carbon nanotubes after the secondary forming are maintained, and the electrical conductive paths pass through, so that the electrical conductivity can be obtained.

A laminated body according to a fourth disclosure is the laminated body according to any one of the first to third disclosures, wherein content of carbon nanotubes in the antistatic layer is 0.5 % by weight or more and 10 % by weight or less.

Thus, electrical conductivity can be obtained even when the content of carbon nanotubes is small. Moreover, since the content of carbon nanotubes can be reduced, transparency can be ensured.

A laminated body according to a fifth disclosure is the laminated body according to any one of the first to fourth disclosures, wherein the carbon nanotubes are single-walled carbon nanotubes.

By using single-walled carbon nanotubes, it is possible to increase the specific surface area, which is an important factor of electrical conductivity, so that the electrical conductivity can be improved.

A laminated body according to a sixth disclosure is the laminated body according to any one of the first to fifth disclosures, wherein a specific surface area per unit weight of carbon nanotubes is $1500 m^2/g$ or more.

By using the carbon nanotubes having such large specific surface area, the electrical conductivity of the carbon nanotubes themselves can be improved more than before. Therefore, even when the carbon fiber content is less than before and the thickness of the antistatic layer is made smaller than before, the antistatic property can be ensured after drawing by thermoforming, and it is possible to relax the restrictions on manufacturing. Moreover, since the content of carbon nanotubes can be suppressed, the transparency of the laminated body can be ensured. Furthermore, the transparency of the laminated body can be ensured by reducing the thickness of the antistatic layer.

A laminated body according to a seventh disclosure is the laminated body according to the fifth disclosure, wherein a diameter of the carbon nanotubes is 0.5nm or more and 6 nm or less, and a length of the carbon nanotubes is $3\mu m$ or more and $20\mu m$ or less.

By using such single-walled carbon nanotubes, transparency can be ensured due to their small diameters.

A laminated body according to an eighth disclosure is the laminated body according to any one of the first to third disclosures, wherein the carbon nanotubes are multi-walled carbon nanotubes and a length of the carbon nanotubes is $100\mu m$ or more and $3000\mu m$ or less.

By using long carbon nanotubes in this way, the contact points between the carbon nanotubes after the secondary forming are maintained and the electrical conductive path passes through, so that the electrical conductivity can be obtained. In addition, since the aspect ratios are large, the contact can be maintained after the secondary forming even with a small amount added, so that an improvement in transparency can be expected.

A laminated body according to a ninth disclosure is the laminated body according to the eighth disclosure, wherein the carbon nanotubes have 2 or more and 15 or less layers, and a diameter of the carbon nanotubes is 3nm or more and 15nm or less..

By using the carbon nanotubes with such diameters, it is possible to disperse the CNTs without breakage even when sufficient mechanical strength is applied to unaggregating the CNTs. Therefore, a good dispersed state can be formed, and the existence probability of CNT aggregation state (bundles) is low, so high transparency can be ensured.

The laminated body according to a tenth disclosure is the laminated body according to any one of the first to ninth disclosures, and the resin is a thermoplastic resin, and acrylic resin is particularly suitable. Moreover, a base material includes a thermoplastic resin.

This allows the fabrication of secondary products by thermoforming.

A secondary formed product according to a eleventh disclosure is a secondary formed product obtained by thermoforming the laminated body according to any one of the first to tenth disclosures at a forming ratio of 10 times or less, and $1\times10^2 \geqq Rb/Ra$ is satisfied when a surface resistivity of the antistatic layer before thermoforming is set to Ra ($\Omega/\square$) and a surface resistivity of the antistatic layer after thermoforming is Rb ($\Omega/\square$).

As a result, the secondary formed product can also have antistatic properties.

[Advantageous Effects of Invention]

According to the present disclosure, it is possible to provide a laminated body and its secondary formed product which can relax the restrictions in manufacture.

[BRIEF DESCRIPTION OF DRAWINGS]

[Fig. 1]

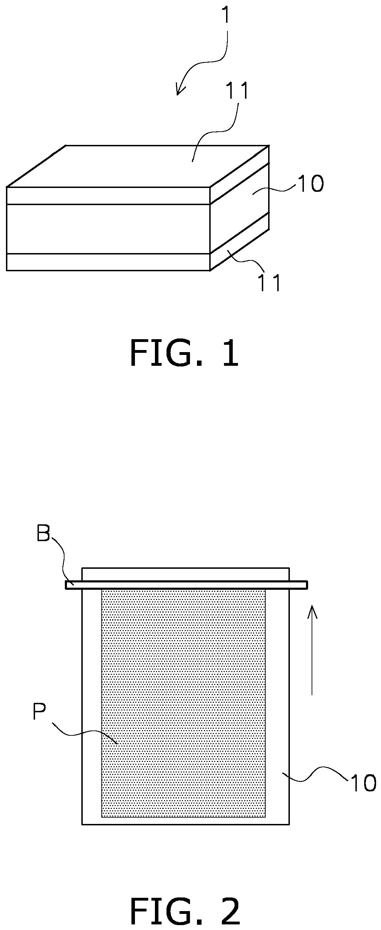

Fig. 1 is a perspective view showing a laminated body of an embodiment according to the present disclosure.
[Fig. 2]
FIG. 2 is a view for explaining a sample preparation method of an example according to the present disclosure.
[Fig. 3]

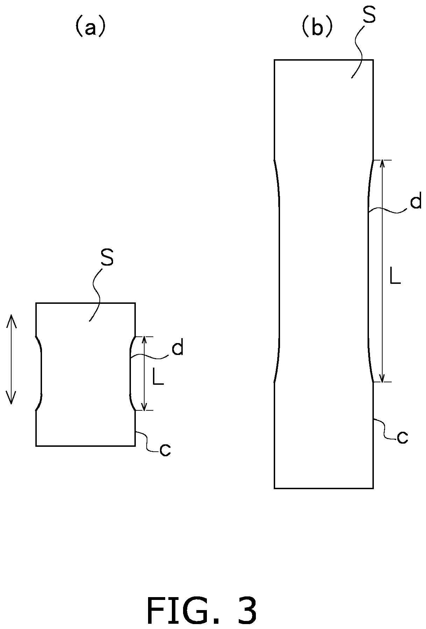

FIG. 3 (a) shows a state before drawing of a sample of an example according to the present disclosure, and (b) shows a state after drawing of a sample of an example according to the present disclosure.

[Description of Embodiments]

Hereinafter, a laminated body and a secondary formed product of embodiments according to the present disclosure will be described below.

(Embodiment 1)

The laminated body 1 according to the first embodiment of the present disclosure will be described below.

(Overview of Laminated body 1)

The laminated body 1 has antistatic properties and is used as an antistatic sheet. Moreover, the laminated body 1 is formed into a secondary product by performing thermoforming.

FIG. 1 is a perspective view of a laminated body 1. The laminated body 1 includes a base material 10, and antistatic coat layers 11 (examples of antistatic layers) formed on both surfaces of the base material 10.

The base material 10 is made of thermoplastic resin. As examples of thermoplastic resins, olefin-based resins such as polypropylene; vinyl-based resins such as polyvinyl chloride, polymethyl methacrylate and polystyrene; ester-based resins such as polycarbonate, polyethylene terephthalate and aromatic polyester; ABS resins; and copolymer resins of each of these resins are preferably used.

It is preferable to set the thickness of the base material 10 to 0.3 mm or more and 15 mm or less. When the thickness of the base material 10 is made thinner than 0.3 mm, the strength may not be ensured because the base material 10 becomes too thin when it is drawn and formed. In addition, when the thickness of the base material 10 is greater than 15 mm, it may not be possible to form it into the expected shape due to the thickness of the base material 10, and heating takes extra time, which may lead to deterioration of the performance of the coating film.

The antistatic coating layer 11 includes carbon nanotubes and a thermoplastic resin as a binder. In the antistatic coating layer 11, the carbon nanotubes are dispersed at such minute intervals that they can contact or conduct electricity, so static electricity can be released and charging can be prevented.

As examples of thermoplastic resins, olefin-based resins such as polypropylene; vinyl-based resins such as polyvinyl chloride, polymethyl methacrylate and polystyrene; ester-based resins such as polycarbonate, polyethylene terephthalate and aromatic polyester; ABS resins; and a copolymer resin of each of these resin are preferably used. The thermoplastic resin of the base material and the thermoplastic resin of the antistatic coating layer 11 may be of different types or may be of the same type.

Amorphous thermoplastic resins are preferably used to maintain transparency and formability. In the case of highly transparent acrylic resins in particular, the transparency after drawing varies greatly depending on the molecular weight of the acrylic resin and whether it is a copolymer resin with other resins. Regarding the difference in molecular weight, a group using a low-molecular-weight acrylic resin can maintain transparency after drawing, particularly a low haze value, compared to a group using a high-molecular-weight acrylic resin. This is considered to be related to compatibility with carbon nanotubes. High-molecular-weight resins have long molecular chains and has poor compatibility with carbon nanotubes. However, low-molecular-weight resins have good compatibility with carbon nanotubes, so it is thought that transparency is maintained.

Further, it is known that a group using a copolymer resin of an acrylic resin and other resin components further improves the transparency. It is considered that this is also due to the improvement in compatibility for the same reason as described above. As other resin, a styrene resin can be used as an example.

In selecting the binder resin for the coating film, transparency and compatibility with carbon nanotubes are also important, but considering the actual usage environment, it is preferable that the binder resin has at least chemical resistance to the extent that it can be used for cleaning.

A single-walled carbon nanotube is used as the carbon nanotube of the present embodiment. A carbon nanotube has a structure in which a sheet of benzene rings is rolled into a cylinder. A single-walled carbon nanotube is composed of a cylinder with one layer.

The specific surface area per unit weight of a carbon nanotube is 350 $m^2$/g or more. The specific surface area is preferably 1500 $m^2$/g or more. Here, although the specific surface area is a calculated value, regarding the carbon nanotube as a cylinder, the specific surface area can be obtained from the length, diameter and density of the cylinder by using the following formula 1.

(Formula 1)

The specific surface area per unit weight of the carbon nanotube$[m^2 \, / \, \text{Kg}]$

$$= \frac{\text{The diameter of the carbon nanotube}[m] \times \text{The length of the carbon nanotube}[m] \times \pi}{\text{The density of the carbon nanotube}\left[\frac{\text{Kg}}{\text{m}^3}\right] \times \left(\frac{\text{the diameter of the carbon nanotube}[m]}{2}\right)^2 \pi \times \text{the length of the carbon nanotube}[m]}$$

The diameter of the single-walled carbon nanotube is preferably set to 0.5 nm or more and 6 nm or less, more preferably 1.5 nm or more and 4 nm or less. Also, the length of the single-walled carbon nanotube is preferably set to 3$\mu$m or more and 20$\mu$m or less, more preferably 5$\mu$m or more and 10$\mu$m or less.

The aspect ratio (length/diameter) of the carbon nanotube is preferably 2000 or more, more preferably 3000 or more. It is considered that the higher the aspect ratio, the higher the possibility of maintaining the contact between the carbon nanotubes when the carbon nanotubes are drawn. Therefore, it is desirable to use carbon nanotubes with a larger aspect ratio, and high electrical conductivity can be expected.

The single-walled carbon nanotube has higher electrical conductivity as the specific surface area increases. Since a single layer has a large specific surface area per weight, high electrical conductivity can be exhibited with a small content.

The content of carbon nanotubes in the antistatic coating layer 11 is preferably set to 0.5% by weight or more and 10% by weight or less. This is because the surface resistivity of the laminated body 1 increases and the antistatic performance is lost when the content of carbon nanotubes is less than the lower limit value of 0.5% by weight, and transparency decreases when the content exceeds the upper limit of 10% by weight. The content is preferably 0.75% by weight or more and 7% by weight or less, more preferably 1% by weight or more and 5% by weight or less.

The thickness of the antistatic coating layer 11 is preferably 0.1$\mu$m or more and 3 $\mu$m or less, more preferably 0.2 $\mu$m or more and 2 $\mu$m or less, and more preferably 0.3 $\mu$m or more and 1 $\mu$m or less.

A secondary processed product can be formed by heating the laminated body 1 and performing bending, press forming, vacuum forming, pressure forming, blow forming, press molding, or the like.

Further, the above-described transparency is also an important item for the laminated body 1 of the present disclosure, and the transparency is represented by total light transmittance and haze. The total light transmittance before forming is preferably 80% or more, more preferably 85% or more. Similarly, when drawing 5 times, the total light transmittance is preferably 80% or more, more preferably 85% or more. Since the coating film is thinned by drawing, it is generally considered that the total light transmittance after drawing is higher than that before drawing.

The haze value is preferably 5% or less, more preferably 3% or less before forming. It is preferably 20% or less, more preferably 10% or less after 5 times forming. Drawing causes interfacial peeling between the carbon nanotubes and the binder resin and conspicuous cohesion sites of the carbon nanotubes in the coating film, resulting in internal haze and a tendency to increase the haze value after drawing.

(Embodiment 2)

Next, a laminated body 1 according to a second embodiment of the present disclosure will be described. The laminated body of the second embodiment differs from that of the first embodiment in the configuration of carbon nanotubes.

The laminated body 1 of the second embodiment includes a base material 10 and antistatic coating layers 11 provided on both surfaces of the base material 10, as in the first embodiment.

The base material 10 is made of a thermoplastic resin as in the first embodiment. As the thermoplastic resin, the same kind of resin as in the first embodiment can be used. Moreover, it is more preferable to set the thickness of the base material 10 to 0.3 mm or more and 15 mm or less.

The antistatic coating layer 11 has carbon nanotubes and a thermoplastic resin as a binder. As the thermoplastic resin of the antistatic coating layer 11, the same kind of resin as in the first embodiment can be used.

Although the optimization of the binder resin was described in Embodiment 1, in the case of the multi-walled carbon nanotubes in Embodiment 2, when a highly transparent acrylic resin is used, no difference in transparency, especially haze value, after drawing due to the molecular weight and the copolymer resin This is probably because the multi-walled carbon nanotubes have good dispersibility in the state of dispersion liquid, so that a high degree of dispersion can be maintained even in the coating film after being mixed with the binder resin.

A carbon nanotube having a plurality of layers of 2 to 15 layers is used as the carbon nanotube of the present embodiment. A carbon nanotube has a structure in which a sheet of benzene rings is rolled into a cylinder. A multi-walled carbon nanotube has a cylinder composed of a plurality of layers.

The specific surface area per unit weight of carbon nanotubes is 350 m$^2$ /g or more. Furthermore, the specific surface area is preferably 400 m²/g or more. Here, the specific surface area can be obtained from the following equation 2 by regarding the carbon nanotube as a cylinder and using the length, diameter and density of the cylinder.

(Formula 2)

The specific surface area per unit weight of the carbon nanotube $[m^2/Kg]$

$$= \frac{\text{The diameter of the carbon nanotube}[m] \times \text{The length of the carbon nanotube}[m] \times \pi}{\text{The density of the carbon nanotube}\left[\frac{Kg}{m^3}\right] \times \left(\frac{\text{the diameter of the carbon nanotube}[m]}{2}\right)^2 \pi \times \text{the length of the carbon nanotube}\left[m\right]}$$

It is preferable to set the diameter of the multi-walled carbon nanotubes of the second embodiment to 5 nm or more and 12 nm or less. When the diameter is 5 nm or more, it is easy to disperse in the dispersion medium during production, and the transparency can be maintained even after drawing. The range of 5 nm or more and 12 nm or less is a range in which long carbon nanotubes can be produced.

Further, the length of the multi-walled carbon nanotubes in the second embodiment is preferably set to 100μm or more and 3000μm or less, more preferably 1000μm or more. Compared with the single-walled carbon nanotube of Embodiment 1, the carbon nanotube of Embodiment 2 has a smaller specific surface area per unit weight, but is longer in length. So, after secondary forming such as drawing, contacts between carbon nanotubes are easily maintained, electric conductive paths pass through, and electrical conductivity can be maintained.

Moreover, the aspect ratio (length/diameter) of the carbon nanotube is preferably 20,000 or more, more preferably 100,000 or more. When the aspect ratio of the carbon nanotubes increases, the possibility of maintaining contact between the carbon nanotubes even after being drawn several times increases, and maintenance of electrical conductivity can be expected.

The content of the multi-walled carbon nanotubes in the antistatic coating layer 11 is preferably set to 0.5% by weight or more and 10% by weight or less. This is because when the carbon nanotube content is less than the lower limit of 0.5% by weight, the surface resistivity of the laminated body 1 increases, and when it exceeds the upper limit value of 10% by weight, the transparency decreases. The content is preferably 0.75% by weight or more and 7% by weight or less, more preferably 1% by weight or more and 5% by weight or less.

It is preferable to set the thickness of the antistatic coating layer 11 to 0.1μm or more and 3μm or less, more preferably 0.2μm or more and 2μm or less, more preferably 0.3μm or more and 1μm or less.

Transparency is also an important item for the laminated body 1 of the present disclosure, and transparency is represented by total light transmittance and haze. The total light transmittance before forming is preferably 80% or more, more preferably 85% or more. Similarly, when drawing 5 times, the total light transmittance is preferably 80% or more, more preferably 85% or more. Since the coating film is thinned by drawing, it is generally considered that the total light transmittance after drawing is higher than that before drawing.

The haze value is preferably 5% or less, more preferably 3% or less before forming. The haze value is preferably 20% or less, more preferably 10% or less after 5 times forming. When the laminated body is drawn, interfacial separation between the CNTs and the binder resin and aggregation sites of the carbon nanotubes become conspicuous in the coating film, causing internal haze at the interface between the coating film and the base material, resulting in a higher haze value after drawing.

(Other embodiments)

Although one embodiment of the present invention has been described above, the present invention is not limited to the above-described embodiment, and various modifications are possible without departing from the gist of the invention.

(A) Although the antistatic coating layer 11 is formed on both surfaces of the base material 10 in the first and second embodiments, it may be formed on only one surface.
(B) Although the laminated body 1 of the above embodiment is formed in a plate shape, it is not limited to this, and may be rod-shaped, tubular, or the like.
(C) Single-walled carbon nanotubes are used in the first embodiment, and multi-walled carbon nanotubes are used in the second embodiment, but the single-walled carbon nanotubes used in the first embodiment and the multi-walled carbon nanotubes used in the second embodiment may be mixed in one antistatic coating layer 11.
In addition, it is preferable to set the content of the carbon nanotubes in the antistatic coating layer 11, which has a combination of single-walled carbon nanotubes and multi-walled carbon nanotubes, to 0.5% by weight or more and 10% by weight or less. It is more preferable to set the base material 10 to 0.3 mm or more and 15 mm or less.

It is preferable to set the thickness of the antistatic coating layer 11 to 0.1$\mu$m or more and 3$\mu$m or less.

(D) In Embodiments 1 and 2 above, a thermoplastic resin is used for the base material 10 and the antistatic coating layer 11 in order to facilitate the secondary forming of the laminated body during the drawing of the secondary forming and to facilitate the followability of the coating film. However, it is not limited to thermoplastic resins, and thermosetting resins may be used as long as they can be secondary formed, the coating film follows drawing, and is not damaged.

(Example)

The laminated body of the present disclosure will be described below using examples.

In the present disclosure, surface resistivity and transparency are evaluated for each of the examples and comparative examples which varies the content of carbon nanotubes (abbreviated as CNT) in the antistatic coating layer 11, the diameter of CNTs, the length of CNTs, the aspect ratio of CNTs, the specific surface area of CNTs, and the thickness of the antistatic coating layer 11 (an example of an antistatic layer).

How to prepare each sample will be explained.

(1) Dissolve a specified amount of resin pellets in a ketone-based solution.

(2) The carbon nanotube dispersion is added to the resin pellet solution and blended.

(3) Drop the mixed paint P on the upper end of the base material 10.

(4) As shown in FIG. 2, both ends of the bar coater B are strongly pressed against the base material 10 and slowly pulled forward (see arrows). In FIG. 2, base material 10, paint P, and bar coater B are illustrated.

(5) Heat the coated base material in an oven at 45°C for 5 minutes.

(6) After curing the coating film, surface resistivity, total light transmittance and haze are measured.

(Examples 1 to 16)

Base material: Acrylic plate with a thickness of 3 mm, total light transmittance of 92.4%, and haze of 0.2%

Solvent: Ketone-based solvent

Thermoplastic binder resin: acrylic resin pellets

Carbon nanotubes: single-walled CNTs with the specific surface area of 1700 $m^2$/g: the average wire diameter of 1.6 nm, the average length of 5 $\mu$m, the aspect ratio of 3125

Single-walled CNTs with specific surface area of 714 $m^2$/g: NANOSOLUTION product name "eXtube (registered trademark) SAZD-030MEK", the average wire diameter of 4 nm, the average length of 10$\mu$m, the aspect ratio of 2500

(Examples 17-24)

Base material: Acrylic plate with a thickness of 3 mm, total light transmittance of 92.4%, and haze of 0.2%

Solvent: Ketone-based solvent

Thermoplastic binder resin: acrylic resin pellets

Carbon nanotube: Long CNT: Nihonshizai Co., Ltd. Product name "Long MWCNT dispersion liquid", the average wire diameter of 7nm, the average length of 2000$\mu$m, the aspect ratio of 290000

(Comparative example 1)

Base material: Acrylic plate with the thickness of 3 mm, the total light transmittance of 92.4%, and the haze of 0.2%

Solvent: Ketone-based solvent

Thermoplastic binder resin: acrylic resin pellets

Carbon nanotube: Multi-walled CNT: Nihonshizai Co., Ltd. Product name: "Small diameter MWCNT dispersion liquid", average wire diameter of 9 nm, average length of 1.5 $\mu$m, aspect ratio of 167

(Comparative example 2)

Base material: Acrylic plate with a thickness of 3 mm, total light transmittance of 92.4%, and haze of 0.2%
Solvent: Ketone-based solvent
Thermoplastic binder resin: acrylic resin pellets
Carbon nanotube: Multi-walled CNT: Nihonshizai Co., Ltd. Product name "Standard MWCNT dispersion liquid", average wire diameter of 13 nm, average length of 1 $\mu$m, aspect ratio of 77

By using the above base material and applying the coating liquid to the surface of the base material with various formulations and film thickness shown in the table and curing, an antistatic acrylic plate with an antistatic plate layer (antistatic layer) formed on the surface with the CNT content and thickness shown in the table was prepared.

Surface resistivity measurement, total light transmittance measurement, haze value measurement, and film thickness measurement were performed on the prepared antistatic acrylic plate.

Hiresta-UX MCP-HT800 (Mitsubishi Chemical Analytic Co., Ltd.) was used for surface resistivity measurement.

A haze meter NDH 500 (Nippon Denshoku Industries Co., Ltd.) was used to measure the total light transmittance and the haze value.

A film thickness meter was used for film thickness measurement.

In addition, the prepared antistatic acrylic plate was subjected to a high temperature tensile test using AUTOGRAPH AG-1 (manufactured by Shimadzu Corporation) at a test temperature of 170 degrees, a tensile speed of 100 mm / min, and a load cell of 1000 N and was drawn 3 times and 5 times in one direction. FIG. 3(a) is a view showing the sample before drawing. As shown in FIG. 3(a), the prepared antistatic acrylic plate is cut into the shape of a sample S in which a notch d is provided near the center of the opposing sides c. Setting the length of the notch d along the side c to L, in the case of drawing three times, as shown in FIG. 3(b), an antistatic plate is drawn in one direction (arrow direction along side c) until L reaches 3L. When an antistatic acrylic plate is drawn 5 times, the antistatic acrylic plate is drawn in one direction until L becomes 5L.

The surface resistivity of the antistatic acrylic plate drawn 3 times and the surface resistivity of the antistatic acrylic plate drawn 5 times were measured, and Rb (surface resistivity after 3 times forming) / Ra (surface resistivity before forming) and Rb (surface resistivity after 5 times forming)/Ra (surface resistivity before forming) were calculated.

These results are shown in Table 1 below.

[Table 1]

| | Composition of antistatic layer (wt%) | | Properties of CNT | | | | | Antistatic layer thickness [μm] | Surface resistance[Ω/□] | | | Rb/Ra | | transparency (Upper: Transmittance/ Lower: Haze) | | |
|---|---|---|---|---|---|---|---|---|---|---|---|---|---|---|---|---|
| | Acrylic resin | CNT | Diameter[nm] | Length [μm] | Aspect ratio | Specific surface area [m²/g] | Surface area per carbon nanotube [m² /carbon nanotube] | | Before forming | After forming 3 times | After forming 5 times | Rb(after 3 times forming) / Ra (before forming) | Rb(after 5 times forming) / Ra (before forming) | before forming (M) | After forming 3 times (%) | After forming 5 times (%) |
| 1 | 99.2 | 0.8 | 1.6 | 5 | 3125 | 1786 | 2.51E-14 | 0.4 | 1.70E+07 | 7.40E+07 | 3.76E+08 | 4.35E+00 | 2.21E+01 | 88.7 | 90.2 | 90.7 |
| | | | | | | | | | | | | | | 0.3 | 32 | 6.5 |
| 2 | 98.8 | 1.2 | 1.6 | 5 | 3125 | 1786 | 2.51E-14 | 0.4 | 1.77E+06 | 4.85E+06 | 7.27E+06 | 2.74E+00 | 4.11E+00 | 87.0 | 89.7 | 90.5 |
| | | | | | | | | | | | | | | 0.4 | 4.3 | 14.3 |
| 3 | 98.4 | 1.6 | 1.6 | 5 | 3125 | 1786 | 2.51E-14 | 0.4 | 7.46E+06 | 5.33E+06 | 7.75E+06 | 7.14E-01 | 1.04E+00 | 86.1 | 89.6 | 90.2 |
| | | | | | | | | | | | | | | 0.4 | 14.7 | 19.4 |
| 4 | 98.4 | 1.6 | 1.6 | 5 | 3125 | 1786 | 2.51E-14 | 0.4 | 6.62E+06 | 7.96E+06 | 1.03E+07 | 1.20E+00 | 1.56E+00 | 87.5 | 89.7 | 88.6 |
| | | | | | | | | | | | | | | 0.7 | 3.4 | 9.5 |
| 5 | 98.4 | 1.6 | 1.6 | 5 | 3125 | 1786 | 2.51E-14 | 0.6 | 5.74E+06 | 1.43E+07 | 1.49E+07 | 2.49E+00 | 2.60E+00 | 86.5 | 89.6 | 89.4 |
| | | | | | | | | | | | | | | 0.9 | 4.4 | 102 |
| 6 | 98.4 | 1.6 | 1.6 | 5 | 3125 | 1786 | 2.51E-14 | 1 | 2.30E+06 | 2.04E+06 | 2.83E+06 | 8.87E-01 | 1.23E+00 | 80.6 | 86.3 | 87.2 |
| | | | | | | | | | | | | | | 1.1 | 178 | 282 |
| 7 | 98.4 | 1.6 | 1.6 | 5 | 3125 | 1786 | 2.51E-14 | 1.6 | 8.27E+05 | 1.58E+06 | 5.34E+06 | 1.91E+00 | 6.46E+00 | 73.5 | 78.8 | 82.9 |
| | | | | | | | | | | | | | | 16 | 472 | 80.1 |

(continued)

| | | | Composition of antistatic layer (wt%) | | Properties of CNT | | | | | Antistatic layer thickness [μm] | Surface resistance[Ω/□] | | | Rb/Ra | | transparency (Upper: Transmittance/Lower: Haze) | | |
|---|---|---|---|---|---|---|---|---|---|---|---|---|---|---|---|---|---|---|
| | | | Acrylic resin | CNT | Diameter[nm] | Length[μm] | Aspect ratio | Specific surface area [m²/g] | Surface area per carbon nanotube [m²/carbon nanotube] | | Before forming | After forming 3 times | After forming 5 times | Rb(after 3 times forming) / Ra (before forming) | Rb(after 5 times forming) / Ra (before forming) | before forming (M) | After forming 3 times (%) | After forming 5 times (%) |
| Examples | Single-walled CNT | 8 | 95 | 5 | 4 | 10 | 2500 | 714 | 1.00E-13 | 0.4 | 7.00E+07 | 2.00E+07 | 4.00E+07 | 2.86E-01 | 5.71E-01 | 82.6 | 85.4 | 87.6 |
| | | | | | | | | | | | | | | | | 0.3 | 5.0 | 7.2 |
| | | 9 | 95 | 5 | 4 | 10 | 2500 | 714 | 1.00E-13 | 1 | 2.00E+07 | 7.00E+06 | 5.00E+06 | 3.50E-01 | 2.50E-01 | 60.7 | 79.2 | 79.4 |
| | | | | | | | | | | | | | | | | 0.4 | 19.6 | 30.2 |
| | | 10 | 95 | 5 | 4 | 10 | 2500 | 714 | 1.00E-13 | 2.5 | 8.00E+06 | 4.00E+06 | 1.00E+06 | 5.00E-01 | 1.25E-01 | 46.3 | 73.9 | 71.6 |
| | | | | | | | | | | | | | | | | 0.4 | 26.1 | 56.1 |
| | | 11 | 97 | 3 | 4 | 10 | 2500 | 714 | 1.00E-13 | 0.4 | 8.00E+08 | 7.00E+06 | 8.00E+07 | 8.75E-03 | 1.00E-01 | 83.4 | 85.8 | 88.8 |
| | | | | | | | | | | | | | | | | 0.5 | 8.4 | 31.5 |
| | | 12 | 97 | 3 | 4 | 10 | 2500 | 714 | 1.00E-13 | 1 | 4.00E+08 | 8.00E+06 | 6.00E+06 | 2.00E-02 | 1.50E-02 | 65.8 | 77.7 | 81.3 |
| | | | | | | | | | | | | | | | | 0.4 | 14.0 | 17.1 |
| | | 13 | 97 | 3 | 4 | 10 | 2500 | 714 | 1.00E-13 | 2.5 | 9.00E+07 | 6.00E+06 | 3.00E+06 | 6.67E-02 | 3.33E-02 | 48.5 | 69.6 | 72.4 |
| | | | | | | | | | | | | | | | | 0.6 | 19.2 | 36.6 |
| | | 14 | 99 | 1 | 4 | 10 | 2500 | 714 | 1.00E-13 | 0.4 | 4.00E+09 | 8.00E+08 | 6.00E+09 | 2.00E-01 | 1.50E+00 | 85.0 | 89.0 | 89.6 |
| | | | | | | | | | | | | | | | | 0.2 | 3.0 | 5.7 |

| | | Composition of antistatic layer (wt%) | | Properties of CNT | | | | | Antistatic layer thickness [μm] | Surface resistance [Ω/□] | | | Rb/Ra | | transparency (Upper: Transmittance/ Lower: Haze) | | |
|---|---|---|---|---|---|---|---|---|---|---|---|---|---|---|---|---|---|
| | | Acrylic resin | CNT | Diameter[nm] | Length [μm] | Aspect ratio | Specific surface area [m²/g] | Surface area per carbon nanotube [m²/carbon nanotube] | | Before forming | After forming 3 times | After forming 5 times | Rb(after 3 times forming) Ra (before forming) | Rb(after 5 times forming) Ra (before forming) | before forming (M) | After forming 3 times (%) | After forming 5 times (%) |
| | 15 | 99 | 1 | 4 | 10 | 2500 | 714 | 1.00E-13 | 1 | 1.00E+09 | 5.00E+08 | 3.00E+09 | 5.00E-01 | 3.00E+00 | 70.0 | 82.2 | 84.7 |
| | | | | | | | | | | | | | | | 0.5 | 8.8 | 9.4 |
| | 16 | 99 | 1 | 4 | 10 | 2500 | 714 | 1.00E-13 | 2.5 | 7.00E+08 | 3.00E+08 | 9.00E+08 | 4.29E-01 | 1.29E+00 | 63.8 | 75.8 | 77.3 |
| | | | | | | | | | | | | | | | 0.6 | 9.8 | 10.0 |
| Long CNT | 17 | 95 | 5 | 7 | 2000 | 290000 | 408 | 4.00E-11 | 0.4 | 3.00E+06 | 8.00E+05 | 4.00E+06 | 2.67E-01 | 1.33E+00 | 86.0 | 88.1 | 89.1 |
| | | | | | | | | | | | | | | | 0.3 | 1.1 | 2.8 |
| | 18 | 95 | 5 | 7 | 2000 | 290000 | 408 | 4.00E-11 | 1 | 1.00E+06 | 6.00E+05 | 4.00E+06 | 6.00E-01 | 4.00E+00 | 70.5 | 81.5 | 84.0 |
| | | | | | | | | | | | | | | | 0.9 | 8.2 | 14.3 |
| | 19 | 95 | 5 | 7 | 2000 | 290000 | 408 | 4.00E-11 | 2.5 | 9.00E+05 | 6.00E+05 | 3.00E+05 | 6.67E-01 | 3.33E-01 | 60.9 | 70.1 | 75.1 |
| | | | | | | | | | | | | | | | 2.0 | 6.5 | 10.0 |
| | 20 | 97 | 3 | 7 | 2000 | 290000 | 408 | 4.00E-11 | 0.4 | 2.00E+08 | 8.00E+07 | 1.00E+08 | 4.00E-01 | 5.00E-01 | 82.1 | 86.2 | 88.1 |
| | | | | | | | | | | | | | | | 0.4 | 5.5 | 3.6 |
| | 21 | 97 | 3 | 7 | 2000 | 290000 | 408 | 4.00E-11 | 1 | 6.00E+07 | 6.00E+06 | 8.00E+07 | 1.00E-01 | 1.33E+00 | 74.8 | 84.1 | 87.1 |
| | | | | | | | | | | | | | | | 0.8 | 9.5 | 11.6 |

| | | | Composition of antistatic layer (wt%) | | Properties of CNT | | | | | Antistatic layer thickness [μm] | Surface resistance [Ω/□] | | | Rb/Ra | | transparency (Upper: Transmittance/ Lower: Haze) | | |
|---|---|---|---|---|---|---|---|---|---|---|---|---|---|---|---|---|---|---|
| | | | Acrylic resin | CNT | Diameter [nm] | Length [μm] | Aspect ratio | Specific surface area [m²/g] | Surface area per carbon nanotube [m²/carbon nano-tube] | | Before forming | After forming 3 times | After forming 5 times | Rb(after 3 times forming) Ra (be-fore form-ing) | Rb(after 5 times forming) Ra (be-fore form-ing) | before forming (M) | After forming 3 times (%) | After forming 5 times (%) |
| | | 22 | 97 | 3 | 7 | 2000 | 290000 | 408 | 4.00E-11 | 2.5 | 2.00E+07 | 3.00E+06 | 3.00E+07 | 1.50E-01 | 1.50E+00 | 60.1 | 75.9 | 77.0 |
| | | | | | | | | | | | | | | | | 23 | 15.7 | 18.1 |
| | | 23 | 99 | 1 | 7 | 2000 | 290000 | 408 | 4.00E-11 | 0.4 | 7.00E+09 | 8.00E+10 | 2.00E+11 | 1.14E+01 | 2.86E+01 | 83.6 | 89.8 | 89.9 |
| | | | | | | | | | | | | | | | | 0.3 | 1.2 | 2.0 |
| | | 24 | 99 | 1 | 7 | 2000 | 290000 | 408 | 4.00E-11 | 1 | 3.00E+09 | 3.00E+10 | 2.00E+11 | 1.00E+01 | 6.67E+01 | 79.5 | 87.3 | 89.4 |
| | | | | | | | | | | | | | | | | 0.5 | 5.0 | 7.8 |
| Compara-tive exam-ple | Multi-walled CNT | 1 | 95 | 5 | 9 | 1.5 | 167 | 317 | 4.00E-14 | 0.4 | 1.00E+06 | 6.00E+07 | 8.00E+08 | 6.00E+01 | 8.00E+02 | 76.3 | 83.1 | 85.2 |
| | | | | | | | | | | | | | | | | 0.9 | 11.4 | 21.1 |
| | | 2 | 95 | 5 | 13 | 1 | 77 | 220 | 4.00E-14 | 0.4 | 2.00E+07 | 5.00E+10 | 1.00E+15 | 2.50E+03 | 5.00E+07 | 70.8 | 80.5 | 82.8 |
| | | | | | | | | | | | | | | | | 1.7 | 3.7 | 6.4 |

EP 4 194 202 A1

From the above (table), when CNTs having a specific surface area of 350m$^2$/g or more are used in Examples 1 to 24, the value of Rb/Ra is $1\times10^2$ or less after 3 times forming and after 5 times forming. On the other hand, in Comparative Examples 1 and 2 in which CNTs having a specific surface area smaller than 350 m$^2$/g were used, Rb/Ra after 5 times forming in Comparative Example 1, and Rb/Ra after 3 times forming and 5 times forming in Comparative Example 2 are greater than $1\times10^2$, indicating that the antistatic property after forming is remarkably lowered. This is due to the difference in surface area per weight of CNT.

From this, it can be seen that the use of CNTs having a specific surface area of 350 m$^2$/g or more can suppress the deterioration of antistatic properties after forming.

Furthermore, in Examples 1 to 7, when single-walled CNTs having a specific surface area of 1500 m$^2$/g or more are used, the same effect as described above can be obtained even with a small addition amount, which is considered preferable.

In addition, the decrease in antistatic properties after forming in Comparative Examples 1 and 2 is also due to the aspect ratio and a comparison of the aspect ratios of Examples 1 to 24 and Comparative Examples 1 and 2 shows that the aspect ratio of CNT is preferably 2000 or more.

It should be noted that it is more preferable to suppress Rb/Ra to $1\times10^2$ or less, and when the film thickness is increased, the electrical conductivity can be further improved and improved. However, increasing the film thickness causes deterioration in transparency such as a decrease in total light transmittance and an increase in haze value. So the thickness of the antistatic layer is preferably 0.1$\mu$m or more and 3$\mu$m or less, more preferably 0.2$\mu$m or more and 2$\mu$m or less, more preferably 0.3 $\mu$m or more and 1$\mu$m or less.

Examples 1, 2, 3, 4, 5, 6, 7, 8, 9, 11, 12, 14, 15, 17, 18, 20, and 21 has a transmittance of 73% or more when the draw ratio is 3 times, and has a transmittance of 79% or more when the draw ratio is 5 times and has high transparency. On the other hand, in Examples 10, 13, 16, 19, and 22 in which the film thickness was 2.5$\mu$m, the surface resistivity was sufficiently ensured before and after drawing, but the total light transmittance and haze value indicates that the transparency is somewhat inferior. Therefore, by setting the thickness of the antistatic layer to 0.3 $\mu$m or more and 1 $\mu$m or less, transparency after drawing can be ensured.

Further, Examples 1 to 7 indicate that a high surface resistivity can be maintained even when the CNT content is low, and high transparency can be ensured due to the low CNT content.

The content of CNTs in the antistatic layer is preferably 0.5% by weight or more and 10% by weight or less, more preferably 0.75% by weight or more and 7% by weight or less, and 1% by weight or more and 5% by weight or less.

In the case of single-walled carbon nanotubes, the CNT diameter is preferably set to 0.5nm or more and 6nm or less, more preferably 1.5nm or more and 4nm or less. In the case of multi-walled carbon nanotubes, it is preferable to set the thickness to 5nm or more and 12nm or less.

In the case of single-walled carbon nanotubes, the length of the CNT is preferably set to 3$\mu$m or more and 20$\mu$m or less, more preferably 5$\mu$m or more and 10$\mu$m or less. In the case of multi-walled carbon nanotubes, the length is preferably set to 100$\mu$m or more and 3000$\mu$m or less, more preferably 1000$\mu$m or more.

Next, Examples 25 to 36 will be used to show the change in transparency due to the difference in the molecular weight of the binder resin when using single-walled CNTs and long CNTs.

In Examples 25 to 30, antistatic acrylic plates were prepared in the same manner as in Example 4 by changing the average molecular weight of the binder resin as shown in Table 2 below.

In Examples 31 to 36, antistatic acrylic plates were prepared in the same manner as in Example 17 by changing the average molecular weight of the binder resin as shown in (Table 2).

The transparency evaluation results are shown in (Table 2) below.

[Table 2]

| Examples | | Composition of antistatic layer (wt%) binder resin | Composition of antistatic layer (wt%) CNT | Properties of binder resin type | Properties of binder resin Average molecular weight [Mw] | Properties of CNT Diameter [nm] | Properties of CNT Length [μm] | Properties of CNT Aspect ratio | Properties of CNT Specific surface area [m²/g] | Properties of CNT Surface area per carbon nanotube [m²/carbon nanotube] | Antistatic layer thickness [μm] | transparency (Upper: Transmittance/Lower: Haze) before forming (%) | transparency After forming 3 times (%) | transparency After forming 5 times (%) |
|---|---|---|---|---|---|---|---|---|---|---|---|---|---|---|
| 25 | Single-walled CNT | 98.4 | 1.6 | High molecular weight PMMA | 140,000 | 1.6 | 5 | 3125 | 1786 | 2.51E-14 | 04 | 87.8 / 0.3 | 89.3 / 7.8 | 90.5 / 15.5 |
| 26 | Single-walled CNT | 98.4 | 1.6 | High molecular weight PMMA | 100,000 | 1.6 | 5 | 3125 | 1786 | 2.51E-14 | 04 | 87.6 / 0.2 | 89.4 / 7.4 | 91.2 / 14.3 |
| 27 | Single-walled CNT | 98.4 | 1.6 | Low molecular weight PMMA | 68,000 | 1.6 | 5 | 3125 | 1786 | 2.51E-14 | 04 | 88.1 / 0.2 | 89.1 / 3.8 | 90.0 / 7.0 |
| 28 | Single-walled CNT | 98.4 | 1.6 | Low molecular weight PMMA | 40,000 | 1.6 | 5 | 3125 | 1786 | 2.51E-14 | 04 | 88.4 / 0.2 | 89.0 / 2.6 | 90.3 / 7.0 |
| 29 | Single-walled CNT | 98.4 | 1.6 | MS | Non-disclosure | 1.6 | 5 | 3125 | 1786 | 2.51E-14 | 04 | 87.6 / 0.2 | 89.8 / 2.4 | 91.5 / 5.5 |
| 30 | Single-walled CNT | 98.4 | 1.6 | MS | Non-disclosure | 1.6 | 5 | 3125 | 1786 | 2.51E-14 | 04 | 87.4 / 0.2 | 88.5 / 2.3 | 90.0 / 4.8 |

(continued)

| | | | Composition of antistatic layer (wt%) | | Properties of binder resin | | Properties of CNT | | | | | Antistatic layer thick-ness [μm] | transparency (Upper: Transmittance/Lower: Haze) | | |
|---|---|---|---|---|---|---|---|---|---|---|---|---|---|---|---|
| | | | binder resin | CNT | type | Average molecular weight [Mw] | Diameter[nm] | Length [μm] | Aspect ratio | Specific surface area [m²/g] | Surface area per carbon nano-tube [m² /carbon nanotube] | | before forming (%) | After forming 3 times (%) | After forming 5 times (%) |
| Long CNT | | 31 | 95 | 5 | High molecular weight PMMA | 140,000 | 7 | 2000 | 290000 | 408 | 4.00E-11 | 0.4 | 85.3 | 87.3 | 89.0 |
| | | | | | | | | | | | | | 0.3 | 1.5 | 2.8 |
| | | 32 | 95 | 5 | High molecular weight PMMA | 100,000 | 7 | 2000 | 290000 | 408 | 4.00E-11 | 0.4 | 86.0 | 88.0 | 89.8 |
| | | | | | | | | | | | | | 0.2 | 1.4 | 2.8 |
| | | 33 | 95 | 5 | Low molecular weight PMMA | 68,000 | 7 | 2000 | 290000 | 408 | 4.00E-11 | 0.4 | 85.3 | 87.2 | 89.2 |
| | | | | | | | | | | | | | 0.4 | 1.1 | 1.9 |
| | | 34 | 95 | 5 | Low molecular weight PMMA | 40,000 | 7 | 2000 | 290000 | 408 | 4.00E-11 | 0.4 | 87.2 | 88.4 | 89.5 |
| | | | | | | | | | | | | | 0.4 | 1.2 | 2.0 |
| | | 35 | 95 | 5 | MS | Non-disclosure | 7 | 2000 | 290000 | 408 | 4.00E-11 | 0.4 | 85.3 | 86.8 | 88.4 |
| | | | | | | | | | | | | | 0.3 | 0.2 | 3.3 |
| | | 36 | 95 | 5 | MS | Non-disclosure | 7 | 2000 | 290000 | 408 | 4.00E-11 | 0.4 | 84.9 | 86.7 | 88.4 |
| | | | | | | | | | | | | | 0.2 | 0.3 | 3.3 |

From the above table, by comparing Examples 25 and 26 with Examples 27 and 28, when using a single-walled carbon nanotube and an acrylic resin, it can be seen that by using a lower molecular weight acrylic resin, the increase in haze value after drawing based on before forming can be reduced and high transparency can be maintained. Furthermore, in Examples 29 and 30, it can be seen that the transparency can be further improved by using a copolymer resin of an acrylic resin and a styrene resin. Also, from the viewpoint of chemical resistance, the acrylic/styrene copolymer resin exhibits higher chemical resistance, and is suitable for the field of antistatic plates that are regularly cleaned with chemicals.

On the other hand, in the groups of long carbon nanotubes and acrylic resins of Examples 31 to 36, high transparency can be maintained even after drawing regardless of the molecular weight or the copolymer resin.

INDUSTRIAL APPLICABILITY

The laminated body and the secondary forming product of the present disclosure have the effect of improving antistatic properties, and are useful as equipment covers and partition plates for clean rooms and the like used in the manufacture of semiconductors.

REFERENCE SIGNS LIST

1 Laminated body
10 Base material
11 Antistatic coating layer (antistatic layer)
P Antistatic paint

**Claims**

1. A laminated body comprising:

   a base material; and
   an antistatic layer provided on the base material, the antistatic layer containing carbon nanotubes and a resin, wherein a specific surface area per unit weight of the carbon nanotubes is 350 m$^2$/g or more.

2. The laminated body according to claim 1, wherein
   a thickness of the antistatic layer is 0.1$\mu$m or more and 3$\mu$m or less.

3. The laminated body according to claim 1 or claim 2, wherein
   an aspect ratio of the carbon nanotubes is 2000 or more.

4. The laminated body according to any one of claims 1 to 3, wherein
   a content of the carbon nanotubes in the antistatic layer is 0.5% by weight or more and 10% by weight or less.

5. The laminated body according to any one of claims 1 to 4, wherein
   the carbon nanotubes are a single-walled carbon nanotubes.

6. The laminated body according to any one of claims 1 to 5, wherein
   a specific surface area per unit weight of the carbon nanotubes is 1500 m$^2$/g or more.

7. The laminated body according to claim 5, wherein

   a diameter of the carbon nanotubes is 0.5nm or more and 6nm or less, and
   a length of the carbon nanotubes is 3$\mu$m or more and 20$\mu$m or less.

8. The laminated body according to any one of claims 1 to 3, wherein

   the carbon nanotubes are multi-walled carbon nanotubes, and
   a length of the carbon nanotubes is 100$\mu$m or more and 3000$\mu$m or less.

9. The laminated body according to claim 8, wherein

the carbon nanotube includes 2 or more and 15 or less layers, and
a diameter of the carbon nanotube is 3nm or more and 15nm or less.

10. The laminated body according to any one of claims 1 to 9, wherein

the resin is a thermoplastic resin, and
the base material includes a thermoplastic resin.

11. A secondary formed product obtained by thermoforming the laminated body according to any one of claims 1 to 10 at a forming ratio of 10 times or less,
satisfying $1{\times}10^2 \geqq Rb/Ra$ when setting a surface resistivity of the antistatic layer before the thermoforming to Ra $(\Omega/\square)$ and a surface resistivity of the antistatic layer after the thermoforming to Rb $(\Omega/\square)$.

FIG. 1

FIG. 2

(a)

(b)

FIG. 3

## INTERNATIONAL SEARCH REPORT

| International application No. |
| --- |
| PCT/JP2021/022386 |

**A. CLASSIFICATION OF SUBJECT MATTER**

Int.Cl. B32B27/18(2006.01)i, B82Y30/00(2011.01)i, H01B1/04(2006.01)i, H01B5/14(2006.01)i
FI: B32B27/18D, B82Y30/00, H01B5/14A, H01B1/04

According to International Patent Classification (IPC) or to both national classification and IPC

**B. FIELDS SEARCHED**

Minimum documentation searched (classification system followed by classification symbols)
Int.Cl. B32B27/18, B82Y30/00, H01B1/04, H01B5/14

Documentation searched other than minimum documentation to the extent that such documents are included in the fields searched

Published examined utility model applications of Japan    1922–1996
Published unexamined utility model applications of Japan  1971–2021
Registered utility model specifications of Japan          1996–2021
Published registered utility model applications of Japan  1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2015/045417 A1 (ZEON CORPORATION) 02 April 2015 (2015-04-02), paragraphs [0028], [0066], [0068], [0070], [0072], [0082], examples | 1, 3, 5, 6, 8–10 |
| A | entire text, all drawings | 2, 4, 7, 11 |
| X | JP 2008-177143 A (TORAY INDUSTRIES, INC.) 31 July 2008 (2008-07-31), claims 1, 10, 11, paragraphs [0002], [0097], [0111], [0122] | 1, 2, 4, 5, 10 |
| A | entire text, all drawings | 3, 6–9, 11 |
| A | JP 2014-201488 A (TOYO INK SC HOLDINGS CO., LTD.) 27 October 2014 (2014-10-27), entire text, all drawings | 1–11 |

☐ Further documents are listed in the continuation of Box C.　　☒ See patent family annex.

| | |
| --- | --- |
| *　　Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 18 August 2021 | 31 August 2021 |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

| INTERNATIONAL SEARCH REPORT | International application No. |
|---|---|
| Information on patent family members | PCT/JP2021/022386 |

```
WO 2015/045417 A1  02 April 2015      (Family: none)

JP 2008-177143 A   31 July 2008       (Family: none)

JP 2014-201488 A   27 October 2014    (Family: none)
```

Form PCT/ISA/210 (patent family annex) (January 2015)

**REFERENCES CITED IN THE DESCRIPTION**

**Patent documents cited in the description**

- JP HI1353947 B